# EUROPÄISCHE PATENTSCHRIFT

(11) **EP 3 810 362 B1**
(45) Veröffentlichungstag und Bekanntmachung des Hinweises auf die Patenterteilung: **14.02.2024**
(21) Anmeldenummer: 19752683.3
(22) Anmeldetag: 08.08.2019
(51) Int. Cl.: B23B 51/04

(54) **BOHRWERKZEUG**
BORING TOOL
OUTIL DE PERÇAGE

(30) Priorität: 09.08.2018 DE 102018119445
(43) Veröffentlichungstag der Anmeldung: 28.04.2021
(73) Patentinhaber: Hartmetall-Werkzeugfabrik Paul Horn GmbH, 72072 Tübingen (DE)
(72) Erfinder: SCHMIDA, Peter Paul, 6232 Münster (AT); SCHWAIGER, Manfred Josef, 5550 Radstadt (AT)
(74) Vertreter: Witte, Weller & Partner Patentanwälte mbB
(86) Internationale Anmeldenummer: PCT/EP2019/071284
(87) Internationale Veröffentlichungsnummer: WO 2020/030726

(56) Entgegenhaltungen:
- EP-A1- 2 098 319
- DE-A1- 19 710 995
- JP-A- S54 116 795
- JP-A- 2001 150 219
- US-A- 4 265 574
- US-A- 4 367 991

## Beschreibung

Die vorliegende Erfindung betrifft ein Bohrwerkzeug, das gemäß dem Oberbegriff des Anspruchs 1 eine Werkzeughalter aufweist, der sich entlang einer Mittelachse erstreckt und eine erste Schneidplattenaufnahme sowie eine zweite Schneidplattenaufnahme aufweist, wobei die erste Schneidplattenaufnahme eine erste Anlagefläche hat, welche parallel zu der Mittelachse ausgerichtet ist, und wobei die zweite Schneidplattenaufnahme eine zweite Anlagefläche hat, welche parallel zu der Mittelachse ausgerichtet ist. Das Bohrwerkzeug weist ferner eine erste Schneidplatte, die in der ersten Schneidplattenaufnahme befestigt ist und mit einer ihrer Seiten an der ersten Anlagefläche anliegt, sowie eine zweite Schneidplatte auf, die in der zweiten Schneidplattenaufnahme befestigt ist und mit einer ihrer Seiten an der zweiten Anlagefläche anliegt. Ein axialer Teilbereich der ersten Schneidplatte steht über ein stirnseitiges Ende des Werkzeughalters axial ab und die erste Schneidplatte weist in dem axialen Teilbereich eine erste Hauptschneidkante auf, welche gegenüber einer ersten imaginären Ebene, die orthogonal zu der Mittelachse ausgerichtet ist und an dem stirnseitigen Ende des Werkzeughalters angeordnet ist, derart geneigt ist, dass ein radial außenliegendes Ende der ersten Hauptschneidkante einen größeren Abstand von der ersten imaginären Ebene hat als ein radial innenliegendes Ende der ersten Hauptschneid-kante und die erste Hauptschneidkante die erste imaginäre Ebene nicht schneidet. Die erste Hauptschneidkante berührt oder schneidet eine zweite imaginäre Ebene, die durch die Mittelachse aufgespannt wird und orthogonal zu der ersten Anlagefläche ausgerichtet ist.

Ein Bohrwerkzeug, das die Grundlage für den Oberbegriff des Anspruchs 1 bildet, ist aus der US 4,367,991 A bekannt. Weitere beispielhafte Bohrwerkzeuge sind aus den folgenden Druckschriften bekannt: US 4,265,574 A, DE 197 10 995 A1, EP 2 098 319 A1, JP S54 116795 A und JP 2001 150219 A.

Das erfindungsgemäße Bohrwerkzeug eignet sich insbesondere zur Bearbeitung von fertig gesintertem Hartmetall oder Keramiken. Der Einsatz des erfindungsgemäßen Bohrwerkzeugs ist jedoch nicht auf die Bearbeitung von Werkstücken aus solchen Werkstoffen beschränkt, gleichwohl ist dies der bevorzugte Einsatzzweck.

Fertig gesintertes Hartmetall hat eine sehr hohe Härte. Neben dem Einsatz als Schneidwerkstoff wird gesintertes Hartmetall häufig auch in der Umformtechnik als Stempel, Hammer oder als Verschleißteil eingesetzt. Die Bearbeitung solcher Bauteile aus gesintertem Hartmetall erfolgt traditionell überwiegend durch Schleifen und Erodieren. Ebenso sind Fräswerkzeuge bekannt, deren Schneiden aus Hartmetall sind, die mit einer Diamantschicht überzogen sind. Bohrer, die sich zur Bearbeitung von gesintertem Hartmetall eignen, sind der Anmelderin bisher jedoch nicht bekannt.

Die Herstellung von Durchgangs- oder Sacklöchern in Werkstücke aus gesintertem Hartmetall gestalten sich aufgrund der sehr hohen Härte dieses Werkstoffs in der Praxis häufig als überaus kompliziert. Insbesondere wenn in derlei Löcher/Bohrungen ein Gewinde eingeschnitten werden soll, ist die Verwendung von Werkzeugen mit sehr präzisen und gleichzeitig sehr stabilen Schneiden extrem hoher Härte zwingend erforderlich. Dies ist mit den bisher bekannten Erodierverfahren quasi nicht möglich. Einzig mit diamantbeschichteten Hartmetallfräsern ließ sich dies bisher bewerkstelligen. Die Standzeiten solcher diamantbeschichteter Hartmetallfräser sind jedoch sehr kurz, so dass sich die Verwendung von derartigen Fräswerkzeugen als kostenintensiv herausgestellt hat.

Das Bohren von gesintertem Hartmetall mit herkömmlichen Bohrern ist insbesondere aus den folgenden Gründen bisher nicht möglich gewesen: Neben mangelnder Festigkeit und Stabilität der bisher bekannten Bohrwerkzeuge stellt auch die extreme Hitzeentwicklung bei der Zerspanung von gesintertem Hartmetall ein hohes Hindernis dar. Zudem würde bei der Verwendung herkömmlicher Bohrwerkzeuge ein zu hoher Druck im Zentrum des Bohrers aufgebaut werden, da hier die Schnittgeschwindigkeit des Bohrers typischerweise null ist, weil der Zerspanprozess ausgehend vom Zentrum bzw. der Spitze des Bohrers, um das der Bohrer rotiert, von innen nach außen erfolgt. Für die Bearbeitung von gesintertem Hartmetall mittels Bohren wären daher Bohrwerkzeuge mit speziell dafür angepassten Schneidengeometrien erforderlich.

Es ist daher eine Aufgabe der vorliegenden Erfindung, ein Bohrwerkzeug bereitzustellen, welches die oben genannten Probleme überwindet und sich insbesondere für die Bearbeitung von gesintertem Hartmetall und Keramiken eignet.

Erfindungsgemäß wird ein Bohrwerkzeug mit den Merkmalen des Anspruchs 1 angegeben. Bevorzugte Ausführungsformen der Erfindung sind in den abhängigen Ansprüchen definiert. Ausgehend von dem Bohrwerkzeug der eingangs genannten Art wird diese Aufgabe erfindungsgemäß dadurch gelöst, dass die erste Schneidplatte aus CVD-Dickschicht-Diamant ist und stoffschlüssig mit der ersten Schneidplattenaufnahme verbunden ist.

Das erfindungsgemäße Bohrwerkzeug zeichnet sich durch eine Schneidengeometrie aus, die speziell für die Bearbeitung von Werkstoffen mit sehr hoher Härte angepasst ist. Charakteristisch für diese Schneidengeometrie ist die Neigung der Hauptschneidkante von außen nach innen. Das radial äußere Ende der Hauptschneidkante steht in axialer Richtung (also parallel zur Mittelachse) weiter über das stirnseitige Ende des Werkzeughalters über als das radial innenliegende Ende der Hauptschneidkante.

Der Anschnitt am Werkstück erfolgt bei dem erfindungsgemäßen Bohrwerkzeug also nicht von innen nach außen, sondern von außen nach innen. Das erfindungsgemäße Bohrwerkzeug hat keine zentrale Bohrspitze und damit keine konvexe Schneidengeometrie des Bohrkopfes, wie sie in den meisten Fällen ansonsten üblich ist, sondern eine konkave Schneidengeometrie des Bohrkopfes. Hierdurch wird der Druck auf das Zentrum des Bohrkopfes erheblich gesenkt. Somit ist es möglich, die Schnittgeschwindigkeit im Zentrum des Bohrers (typischerweise null) weitgehend zu negieren.

Zur besseren Beschreibung dieses charakteristischen Verlaufs der Hauptschneidkante wird vorliegend auf zwei imaginäre Ebenen Bezug genommen, welche lediglich der Beschreibung der Geometrie und Lage der Hauptschneidkante dienen. Die erste imaginäre Ebene ist orthogonal zu der Mittelachse ausgerichtet und verläuft durch das stirnseitige Ende des Werkzeughalters bzw. berührt das stirnseitige Ende des Werkzeughalters. Sie stellt eine Art Vertikal- bzw. yz-Ebene dar. Gegenüber dieser ersten imaginären Ebene ist die Hauptschneidkante der Schneidplatte, welche vorliegend als erste Hauptschneidkante bezeichnet wird, derart geneigt, dass das radial außenliegende Ende der ersten Hauptschneidkante einen größeren Abstand von der ersten imaginären Ebene hat als ein radial innenliegendes Ende der ersten Hauptschneidkante. Die erste Hauptschneidkante liegt jedoch gesamthaft auf einer Seite dieser ersten imaginären Ebene, wohingegen der Werkzeughalter gesamthaft auf der gegenüberliegenden Seite dieser ersten imaginären Ebene liegt.

Die zur Beschreibung der Geometrie und Lage der ersten Hauptschneidkante dienende zweite imaginäre Ebene wird durch die Mittelachse des Werkzeughalters aufgespannt und verläuft orthogonal zu der ersten Anlagefläche. Die Mittelachse des Werkzeughalters liegt also in dieser zweiten imaginären Ebene. Die erste Hauptschneidkante berührt oder schneidet diese zweite imaginäre Ebene. Die erste Hauptschneidkante schneidet damit also bis zum Zentrum oder über das Zentrum des Bohrkopfes hinaus, so dass im Zentrum des Bohrkopfes trotz der konkaven Schneidengeometrie ebenfalls eine spanende Bearbeitung erfolgt und somit in der Mitte des Bohrloches kein Material stehenbleibt.

Aufgrund der Schneidengeometrie der ersten Hauptschneidkante beginnt die spanende Bearbeitung bei einem Ansetzen des Bohrwerkzeuges an ein Werkstück an dem radial äußeren Ende des Bohrkopfes. Dies führt zu einer erhöhten Stabilität sowie zu einer hohen Axialgenauigkeit und Rundheit in der Bohrung.

Die erste Schneidplatte ist aus CVD-Dickschicht-Diamant. Durch die erwähnte Geometrie und Lage der ersten Hauptschneidkante ist es gelungen, die hohe Verschleißfestigkeit des CVD-Dickschicht-Diamanten so zu nützen, dass die exzellenten Eigenschaften des CVD-Dickschicht-Diamanten gegen Reibung genützt und gleichzeitig die Eigenschaften gegen Bruch geschützt werden. Somit ist es möglich, hochharte Werkstoffe mit geometrisch definierter Schneide effizient und stressarm zu bearbeiten.

Das erfindungsgemäße Werkzeug ist als Zwei- oder Mehrschneider ausgebildet. Die zweite Anlagefläche, an der die zweite Schneidplatte anliegt, ist vorzugsweise parallel versetzt zu der ersten Anlagefläche angeordnet. Der Versatz der beiden Anlageflächen ist vorzugsweise derart ausgeführt, dass sich zwischen der ersten Hauptschneidkante der ersten Schneidplatte und der zweiten Hauptschneidkante der zweiten Schneidplatte ein Schneiden-Zwischenraum von maximal 6 Hundertstel ergibt. Dieser Schneiden-Zwischenraum kann auch auf 0 gesetzt werden. Die beiden Hauptschneiden der beiden Schneidplatten überlappen einander jedoch nicht.

Je nach Anzahl der Schneidplatten bearbeiten die Hauptschneidkanten der verschiedenen Schneidplatten vorzugsweise jeweils unterschiedliche radiale Segmente der Bohrung. Bei der Verwendung von zwei Schneidplatten ist es bevorzugt, dass die erste Hauptschneidkante der ersten Schneidplatte die Bohrung von ganz außen bis über das Zentrum der Bohrung hinweg bearbeitet, wohingegen die zweite Hauptschneidkante der zweiten Schneidplatte lediglich den radial äußeren Bereich der Bohrung bearbeitet. Im radial innenliegenden bzw. zentralen Bereich der Bohrung schneidet also nur die erste Schneidplatte, wohingegen im radial äußeren Bereich die Bohrung sowohl von der ersten als auch der zweiten Schneidplatte bearbeitet wird.

Die Schneidplatten sind jeweils stoffschlüssig mit dem Werkzeughalter verbunden. Dies garantiert eine stabile Verbindung der Schneidplatten mit dem Werkzeughalter. Vorzugsweise sind die Schneidplatten mit dem Werkzeughalter verlötet. Wenngleich grundsätzlich auch eine Schweißverbindung in Frage käme, ist eine Lötverbindung vorliegend von Vorteil, da die Schneidplatten vorzugsweise aus CVD-Dickschicht-Diamant sind und der Werkzeughalter vorzugsweise aus Hartmetall ist.

Gemäß einer Ausgestaltung der vorliegenden Erfindung ist die erste Anlagefläche parallel zu einer Radialrichtung des Werkzeughalters ausgerichtet, die orthogonal zu der Mittelachse verläuft.

Die erste Anlagefläche verläuft somit sowohl parallel zu der Mittelachse als auch parallel zu der Radialrichtung. Anders ausgedrückt, verläuft die erste Anlagefläche gemäß dieser Ausgestaltung orthogonal zu der ersten und zweiten imaginären Ebene. Die Kraftübertragung zwischen Werkzeughalter und erster Schneidplatte erfolgt gemäß dieser Ausgestaltung also in Umfangsrichtung, orthogonal zu der Radialrichtung und der Mittelachse.

Gemäß einer weiteren Ausgestaltung ist die erste Hauptschneidkante parallel zu der ersten Anlagefläche ausgerichtet. Gegenüber der Radialrichtung bzw. gegenüber der ersten imaginären Ebene ist die erste Hauptschneidkante vorzugsweise um einen Winkel 0,2° bis 3° geneigt.

Die Neigung der ersten Hauptschneidkante erfolgt, wie bereits erwähnt, von radial außen nach radial innen, so dass eine konkave Schneidengeometrie entsteht. Bei der Bearbeitung eines Werkstücks wird der zunächst radial außen Schnittdruck also langsam von außen nach innen entlang der ersten Hauptschneidkante auf die erste Schneidplatte übertragen, so dass die Gesamtbelastung der ersten Hauptschneidkante verzögert wird. Dies stabilisiert den Schnittdruck und vermeidet Ausbrüche an der ersten Hauptschneidkante.

Gemäß einer weiteren Ausgestaltung hat die erste Hauptschneidkante eine Länge, die größer als ein halber Durchmesser des Werkzeughalters ist.

In dieser Ausgestaltung schneidet die erste Hauptschneidkante vorzugsweise von ganz außen bis nach innen über die Mitte des Bohrwerkzeugs hinweg.

Vorzugsweise steht in der zuletzt genannten Ausgestaltung ein radialer Teilbereich der ersten Schneidplatte über einen äußeren Umfang des Werkzeughalters ab und die erste Schneidplatte weist in dem radialen Teilbereich eine erste Nebenschneidkante auf, die parallel zu der Mittelachse verläuft oder gegenüber der Mittelachse um maximal 2° geneigt ist.

Diese erste Nebenschneidkante hat einen größeren Abstand von der Mittelachse als das radial außenliegende Ende der ersten Hauptschneidkante. Die erste Nebenschneidkante dient als eine Art Abstützung, mit der sich das Bohrwerkzeug umfangsseitig am Werkstück abstützt. Sie dient damit hauptsächlich als Führung. Gleichzeitig erfolgt jedoch auch an dieser Stelle Materialabtrag. Ist die erste Nebenschneidkante gegenüber der Mittelachse des Bohrwerkzeugs leicht geneigt, so wird hierdurch ein besserer Freilauf garantiert, da die erste Nebenschneidkante das zu bearbeitende Werkstück dann größtenteils nicht mehr kontaktiert und somit an dieser Stelle weniger Reibung zwischen der ersten Schneidplatte und dem Werkstück entsteht.

Gemäß einer weiteren Ausgestaltung ist die erste Nebenschneidkante mit der ersten Hauptschneidkante über einen Radius und/oder eine Fase verbunden.

Der Radius und/oder die Fase bilden die Schneidenecke und damit den Punkt, an dem der Anschnitt des Werkstücks beginnt. Der Radius bzw. die Fase schneiden also mit. Es handelt sich hierbei demnach um eine Art Eckenschneidkante.

Gemäß einer weiteren Ausgestaltung ist die erste Nebenschneidkante unter einem Winkel kleiner 90° zu der ersten Hauptschneidkante geneigt.

Der Winkel von < 90° ergibt sich schon allein dadurch, dass die erste Hauptschneidkante, wie bereits erwähnt, unter einem Winkel zu der Radialrichtung nach innen geneigt ist und gleichzeitig die erste Nebenschneidkante gegenüber der Mittelachse geneigt ist.

Gemäß einer Ausgestaltung steht ein axialer Teilbereich der zweiten Schneidplatte über das stirnseitige Ende des Werkzeughalters ab und die zweite Schneidplatte weist in dem axialen Teilbereich eine zweite Hauptschneidkante auf, welche gegenüber der ersten imaginären Ebene derart geneigt ist, dass ein radial außenliegendes Ende der zweiten Hauptschneidkante einen größeren Abstand von der ersten imaginären Ebene hat als ein radial innenliegendes Ende der zweiten Hauptschneidkante und die zweite Hauptschneidkante die erste imaginäre Ebene nicht schneidet. Die zweite Hauptschneidkante der zweiten Schneidplatte ist also ebenso wie die erste Hauptschneidkante der ersten Schneidplatte von außen nach innen geneigt.

Gemäß einer weiteren Ausgestaltung ist die erste Hauptschneidkante gegenüber der ersten imaginären Ebene um einen ersten Winkel geneigt, wohingegen die zweite Hauptschneidkante gegenüber der ersten imaginären Ebene um einen zweiten Winkel, der ungleich dem ersten Winkel ist, geneigt ist.

Da beide Hauptschneidkanten vorzugsweise von außen nach innen geneigt sind, ergibt sich eine konkave Schneidengeometrie. In einer Seitenansicht orthogonal zu den beiden Anlageflächen der Schneidplatten betrachtet, schließen die erste und die zweite Hauptschneidkante vorzugsweise einen Winkel ein, der kleiner als 180°, aber größer als 174° ist. Der minimale Winkel von 174° würde sich bei einer Neigung beider Hauptschneidkanten von 3° gegenüber der ersten imaginären Ebene ergeben.

Vorzugsweise ist eine in Radialrichtung, also orthogonal zu der Mittelachse gemessene Abmessung der zweiten Schneidplatte kleiner als eine in der Radialrichtung gemessene Abmessung der ersten Schneidplatte.

Während die erste Hauptschneidkante die Bohrung vorzugsweise von ganz außen nach innen bis über das Zentrum hinweg bearbeitet, bearbeitet die zweite Hauptschneidkante vorzugsweise lediglich den radial äußeren Rand der Bohrung. Die zweite Hauptschneidkante erstreckt sich somit nicht bis zum Zentrum des Werkzeughalters oder gar über dieses hinweg. Anders ausgedrückt, schneidet die zweite Hauptschneidkante die zweite imaginäre Ebene nicht und berührt diese auch nicht.

Gemäß einer Ausgestaltung ist es jedoch auch möglich, dass die zweite Hauptschneidkante über einen äußeren Umfang des Werkzeughalters absteht, die erste Schneidplatte jedoch nicht. In einer solchen Ausgestaltung würde der radial äußere Randbereich der Bohrung also lediglich durch die zweite Schneidplatte bearbeitet werden und der radial innenliegende Bereich der Bohrung lediglich durch die erste Schneidplatte bearbeitet werden.

Unabhängig davon, ob nur die zweite Schneidplatte über den äußeren Umfang des Werkzeughalters absteht oder beide Schneidplatten über den äußeren Umfang des Werkzeughalters abstehen, weist die zweite Schneidplatte einen radialen Teilbereich auf, der über einen äußeren Umfang des Werkzeughalters absteht, wobei die zweite Schneidplatte der in dem radialen Teilbereich eine zweite Nebenschneide aufweist, die parallel zu der Mittelachse verläuft oder gegenüber der Mittelachse um maximal 2° geneigt ist.

Ähnlich wie bei der ersten Schneidplatte ist auch die zweite Nebenschneidkante mit der zweiten Hauptschneidkante über einen Radius und/oder eine Fase verbunden.

Vorzugsweise ist das erfindungsgemäße Bohrwerkzeug weder dreh- noch spiegelsymmetrisch ausgestaltet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht eines Bohrwerkzeugs gemäß einem ersten Ausführungsbeispiel der vorliegenden Erfindung;
- Fig. 2: ein Detail eines Bohrkopfes des Bohrwerkzeugs aus Fig. 1 in einer Seitenansicht;
- Fig. 3: eine Draufsicht von vorne auf den Bohrkopf des Bohrwerkzeugs aus Fig. 1;
- Fig. 4: den Bohrkopf des Bohrwerkzeugs aus Fig. 1 ohne daran angeordnete Schneidplatten in einer Seitenansicht;
- Fig. 5: den Bohrkopf des Bohrwerkzeugs aus Fig. 1 ohne daran angeordnete Schneidplatten in einer perspektivischen Ansicht;
- Fig. 6: einen Bohrkopf des erfindungsgemäßen Bohrwerkzeugs gemäß einem zweiten Ausführungsbeispiel in einer Seitenansicht; und
- Fig. 7: den Bohrkopf aus Fig. 6 in einer Draufsicht von vorne.

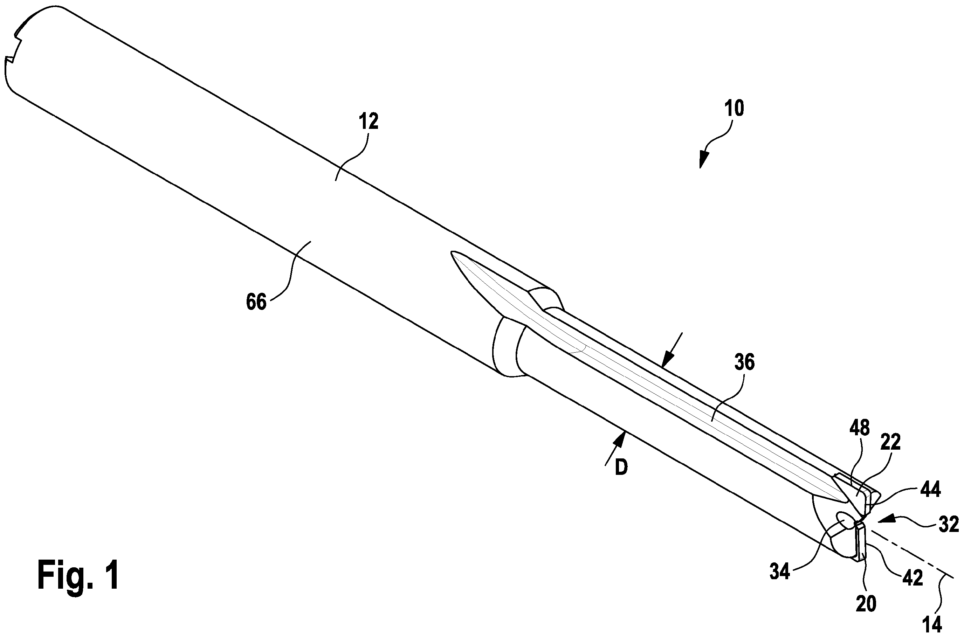

Fig. 1 zeigt eine perspektivische Ansicht eines ersten Ausführungsbeispiels des erfindungsgemäßen Bohrwerkzeugs. Das Bohrwerkzeug ist darin in seiner Gesamtheit mit der Bezugsziffer 10 gekennzeichnet.

Das Bohrwerkzeug 10 ist vorzugsweise weder dreh- noch spiegelsymmetrisch ausgestaltet.

Das Bohrwerkzeug 10 weist einen Werkzeughalter 12 auf, der sich entlang einer Mittelachse 14 erstreckt. Im Bereich seines vorderen Endes weist der Werkzeughalter 12 in dem vorliegend gezeigten Ausführungsbeispiel zwei Schneidplattenaufnahmen 16, 18 auf, welche zu deren besserer Differenzierung als erste Schneidplattenaufnahme 16 und zweite Schneidplattenaufnahme 18 bezeichnet werden. Die beiden Schneidplattenaufnahmen 16, 18 dienen der Aufnahme von zwei Schneidplatten 20, 22, welche vorliegend als erste Schneidplatte 20 und zweite Schneidplatte 22 bezeichnet werden.

Die beiden Schneidplatten 20, 22 sind in dem gezeigten Ausführungsbeispiel unterschiedlich groß ausgestaltet. Zusätzlich zu deren Größenunterschied haben die beiden Schneidplatten 20, 22 in dem vorliegenden Ausführungsbeispiel auch nicht die exakt gleiche Geometrie.

Wenngleich das Bohrwerkzeug 10 in dem gezeigten Ausführungsbeispiel mit zwei Schneidplatten 20, 22 versehen ist, sei an dieser Stelle angemerkt, dass für die Funktion des Bohrwerkzeugs 10 auch nur eine der beiden Schneidplatten, nämlich die Schneidplatte 20 ausreichend wäre. Genauso gut könnte das Bohrwerkzeug 10 auch mit mehr als zwei Schneidplatten versehen sein, ohne den Rahmen der vorliegenden Erfindung zu verlassen.

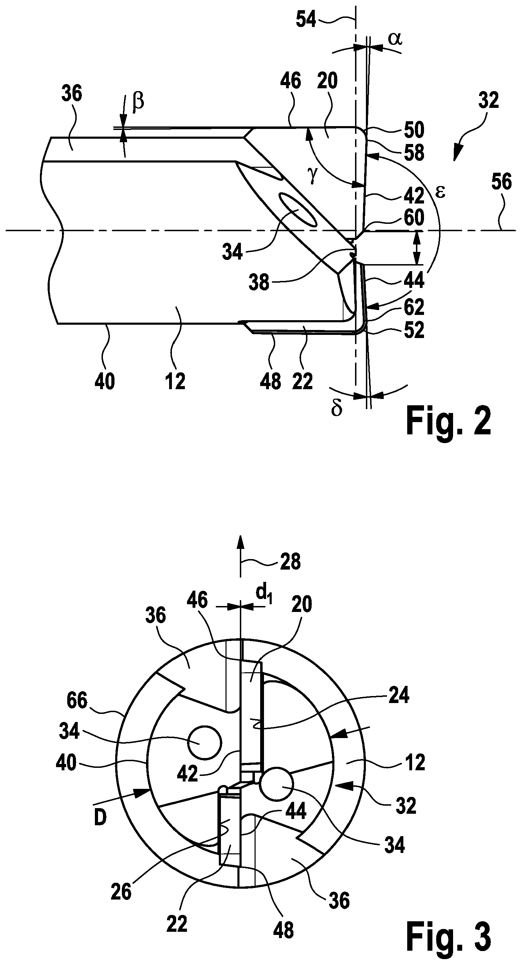

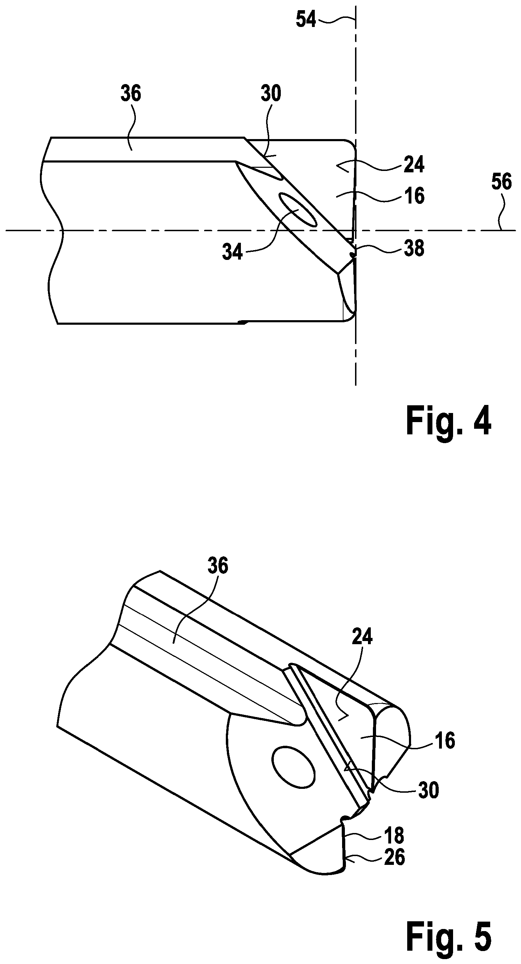

Die Schneidplattenaufnahmen 16, 18, in denen die Schneidplatten 20, 22 angeordnet sind, sind im Detail in den Fig. 4 und 5 ersichtlich, da hier die Schneidplatten 20, 22 nicht dargestellt sind. Beide Schneidplattenaufnahmen 16, 18 weisen jeweils eine Anlagefläche 24 bzw. 26 auf, an denen die beiden Schneidplatten 20, 22 jeweils plan anliegen (siehe auch Fig. 3). Diese beiden Anlageflächen 24, 26, welche vorliegend als erste Anlagefläche 24 und zweite Anlagefläche 26 bezeichnet werden, verlaufen vorzugsweise jeweils parallel zu der Mittelachse 14 des Werkzeughalters 12. Ebenso bevorzugt verlaufen die beiden Anlageflächen 24, 26 parallel zueinander und parallel zu einer Radialrichtung 28 des Werkzeughalters 12. Die Radialrichtung 28, welche orthogonal zu der Mittelachse 14 verläuft, ist in Fig. 3 einfach mit einem Pfeil dargestellt.

Jede der beiden Schneidplatten 20, 22 liegt mit einer Seitenfläche zusätzlich noch an einer weiteren Abstützfläche am Werkzeughalter 12 an. In Fig. 4 und 5 ist die gemeinte Abstützfläche, an der sich die erste Schneidplatte 20 abstützt, mit der Bezugsziffer 30 gekennzeichnet. Die entsprechende Abstützfläche der zweiten Schneidplattenaufnahme 18, an der sich die zweite Schneidplatte 22 abstützt, ist in Fig. 4 und 5 verdeckt und nicht explizit dargestellt. Sie verläuft jedoch genau wie die Abstützfläche 30 unter einem spitzen Winkel (Winkel < 90°) zu der Mittelachse 14 des Werkzeughalters 12.

Die zweite Schneidplatte 22 ist mit dem Werkzeughalter 12, genauer gesagt mit der Schneidplattenaufnahme 18, vorzugsweise stoffschlüssig verbunden. Besonders bevorzugt sind die beiden Schneidplatten 20, 22 jeweils mit den Schneidplattenaufnahmen 16, 18 verlötet. Die zweite Schneidplatte 22 ist vorzugsweise aus CVD-Dickschicht-Diamant. Der Werkzeughalter 12 ist vorzugsweise aus Hartmetall.

Die Schneidplatten 20, 22 bilden zusammen mit dem vorderen Teil des Werkzeughalters 12, an dem sie befestigt sind, einen Bohrkopf 32, der in Fig. 2 und 3 im Detail in einer Seitenansicht (Fig. 2) sowie in einer Draufsicht von vorne (Fig. 3) gezeigt ist. An diesem Bohrkopf 32 sind in dem vorliegend gezeigten Ausführungsbeispiel zwei Austritte 34 von zwei im Werkzeughalter 12 befindlichen Kühlmittelkanälen angeordnet. Durch diese Kühlmittekanäle lässt sich bspw. gekühlte Luft in dem Bereich des Bohrkopfes 32 transportieren, um die Schneidplatten 20, 22 während des Zerspanungsprozesses zu kühlen. Anstelle von Luft kann natürlich auch jedes andere beliebige Kühlmedium durch die Kühlmittelkanäle zu den Kühlmittelaustritten 34 transportiert werden.

Die vom Werkstück abgehobenen Späne werden über Spannuten 36, welche sich vom Bohrkopf 32 entlang des Werkzeughalters 12 nach hinten erstrecken, abtransportiert. In dem vorliegend gezeigten Ausführungsbeispiel weist das Bohrwerkzeug 10 zwei derartige Spannuten 36 auf, wobei eine der Spannuten 36 der ersten Schneidplatte 20 zugeordnet ist und die andere der beiden Spannuten 36 der zweiten Schneidplatte 22 zugeordnet ist.

In dem in Fig. 1-3 gezeigten ersten Ausführungsbeispiel stehen die beiden Schneidplatten 20, 22 sowohl in axialer Richtung (also entlang der Mittelachse 14) über ein stirnseitiges Ende 38 des Werkzeughalters 12 als auch quer dazu, in Radialrichtung 28 über einen äußeren Umfang 40 des Bohrkopfes 32 nach außen ab.

Die beiden Schneidplatten 20, 22 weisen jeweils eine Hauptschneidkante 42, 44 und jeweils eine Nebenschneidkante 46, 48 auf. Die Hauptschneidkanten 42, 44 befinden sich in dem axialen Teilbereich der Schneidplatten 20, 22, welcher über das stirnseitige Ende 38 des Werkzeughalters 12 absteht. Die Nebenschneidkanten 46, 48 befinden sich in dem radialen Teilbereich, der über den äußeren Umfang 40 des Bohrkopfes 32 absteht.

Die Hauptschneidkante 42 der ersten Schneidplatte 20 wird vorliegend als erste Hauptschneidkante 42 bezeichnet. Die Hauptschneidkante 44 der zweiten Schneidplatte 22 wird vorliegend als zweite Hauptschneidkante 44 bezeichnet. Entsprechend werden die Nebenschneidkante 46 der ersten Schneidplatte 20 als erste Nebenschneidkante und die Nebenschneidkante 48 der zweiten Schneidplatte 22 als zweite Nebenschneidkante 48 bezeichnet.

Die erste Hauptschneidkante 42 ist mit der ersten Nebenschneidkante 46 über eine Eckenschneidkante 50 verbunden, welche als Fase und/oder Radius ausgestaltet sein kann. Die zweite Hauptschneidkante 44 ist mit der zweiten Nebenschneidkante 48 über eine zweite Eckenschneidkante 52 verbunden, welche ebenfalls als Fase und/oder Radius ausgestaltet sein kann. Diese beiden Eckenschneidkanten 50, 52 bilden vorzugsweise den Bereich der jeweiligen Schneidplatte 20, 22, welcher den größten Abstand von der Mittelachse 14 des Werkzeughalters 12 hat.

Im Falle einer Ausbildung der Eckenschneidkanten 50, 52 als Radien, weisen diese vorzugsweise einen Radius im Bereich von 0,1-1 mm auf. Im Falle einer Ausbildung der Eckenschneidkanten 50, 52 als Fasen, sind diese vorzugsweise unter einem Winkel von 5°-20° relativ zu den angrenzenden Hauptschneidkanten 42, 44 geneigt und weisen eine Länge im Bereich von 0,2-1 mm auf.

Zur Beschreibung der Lage und Geometrie der Haupt- und Nebenschneidkanten 42, 44, 46, 48 wird auf zwei imaginäre Ebenen Bezug genommen, welche lediglich einer besseren Beschreibung dienen. Die beiden imaginären Ebenen sind in Fig. 2 und Fig. 4 gestrichelt eingezeichnet und mit den Bezugsziffern 54, 56 versehen. Bei den beiden imaginären Ebenen 54, 56 handelt es sich um zwei zueinander orthogonal ausgerichtete Ebenen. Die imaginäre Ebene 54, welche vorliegend als erste imaginäre Ebene 54 bezeichnet wird, ist orthogonal zu der Mittelachse 14 des Werkzeughalters 12 ausgerichtet und verläuft durch das stirnseitige Ende 38 des Werkzeughalters 12 hindurch. Die imaginäre Ebene 56, welche vorliegend als zweite imaginäre Ebene 56 bezeichnet wird, verläuft orthogonal dazu. Die Mittelachse 14 des Werkzeughalters 12 liegt in dieser zweiten imaginären Ebene 56. Beide imaginären Ebenen 54, 56 verlaufen vorzugsweise orthogonal zu den beiden Anlageflächen 24, 26 der Schneidplattenaufnahmen 16, 18. Die erste imaginäre Ebene 54 bildet mit anderen Worten also die Radialebene, welche durch das stirnseitige Ende 38 des Werkzeughalters 12 verläuft. Die zweite imaginäre Ebene 56 wird hingegen durch die Radialrichtung 28 und die Mittelachse 14 ausgespannt.

Die erste Hauptschneidkante 42 der ersten Schneidplatte 20 ist gegenüber der ersten imaginären Ebene 54 derart geneigt, dass ein radial außenliegendes Ende 58 der ersten Hauptschneidkante 42, welches an die erste Eckenschneidkante 50 angrenzt, einen größeren Abstand von der ersten imaginären Ebene 54 hat als ein radial innenliegendes Ende 60 der ersten Hauptschneidkante 42. Beide Enden 58, 60 der ersten Hauptschneidkante 42 sind jedoch auf der gleichen Seite der ersten imaginären Ebene 54 angeordnet, nämlich auf der von dem Werkzeughalter 12 abgewandten Seite der ersten imaginären Ebene 54. Die erste Hauptschneidkante 42 schneidet die erste imaginäre Ebene 54 daher nicht.

Durch die beschriebene Anordnung entsteht eine Neigung der Hauptschneidkante 42 gegenüber der ersten imaginären Ebene 54 bzw. gegenüber der Radialrichtung 28. Diese Neigung ist in Fig. 2 durch den Winkel α verdeutlicht. Der Winkel α beträgt vorzugsweise 0,2°-3°. Die erste Hauptschneidkante 42 berührt oder schneidet die zweite imaginäre Ebene 56. Anders ausgedrückt, verläuft die erste Hauptschneidkante 42 bis ins Zentrum des Bohrwerkzeugs 10 (falls sie die zweite imaginäre Ebene 56 berührt) oder verläuft über das Zentrum des Bohrwerkzeugs 10 hinaus (wenn sie die zweite imaginäre Ebene 56 schneidet).

Die erste Nebenschneidkante 46 der ersten Schneidplatte 20 verläuft vorzugsweise parallel zu der Mittelachse 14 des Werkzeughalters 12 oder ist zu der Mittelachse 14 des Werkzeughalters 12 unter einem Winkel von maximal 2° geneigt. Dieser Winkel ist in Fig. 2 als Winkel β gekennzeichnet.

Aufgrund der Neigung der ersten Hauptschneidkante bezüglich der Radialrichtung 28 (Winkel α) und der optionalen Neigung der ersten Nebenschneidkante 46 gegenüber der Mittelachse 14 (Winkel β) ergibt sich ein Winkel γ zwischen der ersten Hauptschneidkante 42 und der ersten Nebenschneidkante 46, welcher vorzugsweise kleiner als 90° ist. Dieser Winkel γ ist besonders bevorzugt im Bereich von 85° bis 89,8°.

Die zweite Hauptschneidkante 44 der zweiten Schneidplatte 22 ist ebenfalls in Bezug auf die erste imaginäre Ebene 54 geneigt. Der entsprechende Neigungswinkel ist in Fig. 2 als Winkel δ gekennzeichnet. Auch die Neigung der zweiten Hauptschneidkante 44 ist derart, dass ein radial außenliegendes Ende 62 der zweiten Hauptschneidkante 44 einen größeren Abstand von der ersten imaginären Ebene 54 hat als ein radial innenliegendes Ende 64 der zweiten Hauptschneidkante 44. Die zweite Hauptschneidkante 44 schneidet die erste imaginäre Ebene 54 ebenso nicht.

Zwischen den Hauptschneidkanten 42, 44 ergibt sich somit ein Winkel ε, der kleiner als 180°, aber vorzugsweise größer als 174° ist. Vorzugsweise ist der Winkel ε größer als 174°, aber kleiner als 179,6°. Zusammen genommen ergibt sich am axial vorderen Ende des Bohrkopfes 32 durch die Hauptschneidkanten 42, 44 somit eine konkave Schneidengeometrie.

Anders als die erste Hauptschneidkante 42 der ersten Schneidplatte 20 erstreckt sich die zweite Hauptschneidkante 44 der zweiten Schneidplatte 22 nicht bis ins Zentrum des Bohrwerkzeugs 10. Die zweite Hauptschneidkante 44 berührt oder schneidet die zweite imaginäre Ebene 56 daher nicht.

In dem in Fig. 1-3 gezeigten Ausführungsbeispiel verläuft die zweite Nebenschneidkante 48 der zweiten Schneidplatte 22 parallel zu der Mittelachse 14 des Werkzeughalters 12. Sie kann jedoch, genau so wie die erste Nebenschneidkante 46 unter einem Winkel von maximal 2° geneigt zu der Mittelachse 14 sein. Trotz der beschriebenen Neigungen der Haupt- und Nebenschneidkanten 42, 44, 46, 48 um die Winkel α, β und δ verlaufen die Haupt- und Nebenschneidkanten 42, 44, 46, 48 vorzugsweise parallel zu den beiden Anlageflächen 24, 26 der Schneidplattenaufnahmen 16, 18. Die Haupt- und Nebenschneidkanten 42, 44, 46, 48 sind vorzugsweise allesamt als geradlinige Schneidkanten ausgestaltet.

Bei der Bearbeitung eines Werkstücks mittels des Bohrwerkzeugs 10 treten aufgrund der beschriebenen Neigung der Hauptschneidkanten 42, 44 zunächst die Eckenschneidkanten 50, 52 mit dem Werkstück in Kontakt. Der Bohrkopf 32 stützt sich also mit diesen beiden Eckenschneidkanten 50, 52 am Werkstück ab. Der Anschnitt verläuft aufgrund der beschriebenen Neigung der Hauptschneidkanten 42, 44 bezüglich der Radialrichtung 28 von außen nach innen. Dies erhöht die Verschleißfestigkeit der Schneidplatten 20, 22 enorm, da der Schnittdruck langsam von außen nach innen auf die Schneidengeometrie übertragen wird und somit die Gesamtbelastung verzögert wird. Hierdurch ist der Schnittdruck stabilisiert, so dass Ausbrüche an den Hauptschneidkanten 42, 44 vermieden werden können. Durch die Ausbildung der Schneidplatten 20, 22 als CVD-Dickschicht-Diamant-Schneidplatten ergibt sich ein Bohrwerkzeug mit hochfesten Schneiden, was eine Bearbeitung von sehr harten Werkstoffen wie gesintertem Hartmetall oder Keramik ermöglicht. Der Druck auf das Zentrum des Bohrwerkzeugs 10 wird durch die beschriebene Neigung der Hauptschneidkanten 42, 44 erheblich vermindert. Durch die entwickelte Schneidengeometrie ist es möglich, die Schnittgeschwindigkeit im Zentrum des Bohrers, welche typischerweise 0 ist, weitgehend zu negieren. Die Abstützung in den Ecken 50, 52 führt zu einer erhöhten Stabilität und somit zu höchster Axialgenauigkeit und Rundheit in der Bohrung. Durch die Neigung der Nebenschneidkanten 46, 48 lässt sich die an der Mantelfläche der Bohrung entstehende Reibung minimieren.

Um die hochgenauen Eigenschaften des Bohrwerkzeugs 10 gewährleisten zu können, ist es ferner bevorzugt, dass die Schneidengeometrie bzw. die Schneidkanten 42, 44, 46, 48 mit Hilfe einer Laserbearbeitung hergestellt werden.

Aus der in Fig. 3 dargestellten Draufsicht von vorne ist ferner Folgendes ersichtlich: die beiden Schneidplatten 20, 22 weisen vorzugsweise eine unterschiedliche Größe auf. Die erste Schneidplatte 20 ist insbesondere in Bezug auf deren radialer Erstreckung größer ausgebildet als die zweite Schneidplatte 22. Vorzugsweise weist die erste Schneidplatte 20 in Radialrichtung 28 eine Erstreckung auf, die größer als ein halber Durchmesser des Werkzeughalters 12 ist. Mit diesem Durchmesser, welcher in den Figs. 1 und 3 als Durchmesser D gekennzeichnet ist, ist der Durchmesser des Bohrkopfes 32 gemeint. Im weiter hinten liegenden Teil weist der Werkzeughalter 12 einen Einspannabschnitt 66 auf, dessen Durchmesser im Vergleich zu dem Durchmesser D vorzugsweise größer ist. Da die erste Hauptschneidkante 42 der ersten Schneidplatte 20, wie bereits erwähnt, von ganz außen bis ins Zentrum oder darüber hinaus schneidet, weist die erste Hauptschneidkante 44 ebenso eine Länge auf, die größer als der halbe Durchmesser D des Bohrkopfes 32 ist.

In der in Fig. 3 gezeigten Draufsicht von vorne ist ferner ein Abstand d, eingezeichnet, welcher sich zwischen den beiden Hauptschneidkanten 42, 44 ergibt. Dieser Abstand d, sollte maximal 6 Hundertstel betragen. Der eingezeichnete Abstand d₁ kann jedoch auch 0 sein.

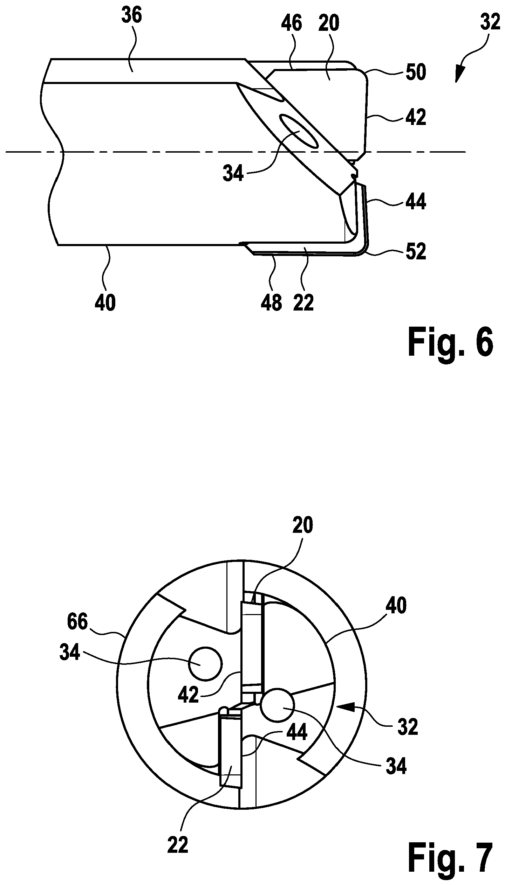

Fig. 6 und 7 zeigen ein zweites Ausführungsbeispiel des erfindungsgemäßen Bohrwerkzeugs 10. In diesem Ausführungsbeispiel steht lediglich die zweite Schneidplatte 22 radial über den äußeren Umfang 40 des Werkzeughalters 12 im Bereich des Bohrkopfes 32 nach außen ab. Die erste Nebenschneidkante 46 der ersten Schneidplatte 20 ist dagegen innerhalb des Werkzeughalters 12 angeordnet, ohne über den äußeren Umfang 40 des Werkzeughalters 12 im Bereich des Bohrkopfes 32 radial nach außen abzustehen. Die charakteristischen Neigungen der Haupt- und Nebenschneidkanten 42, 44, 46, 48 unterscheiden sich jedoch nicht von dem ersten Ausführungsbeispiel. Der Hauptunterschied zu dem ersten Ausführungsbeispiel besteht demnach darin, dass bei dem in Fig. 6 und 7 gezeigten Bohrwerkzeug 10 die Außenkontur der Bohrung lediglich mit Hilfe der zweiten Schneidplatte 22 bearbeitet wird und das Zentrum der Bohrung lediglich mit der ersten Schneidplatte 20 bearbeitet wird. Zwischen diesem äußeren und inneren Bereich wird die Bohrung mit beiden Schneidplatten 20, 22 bearbeitet, wie dies auch gemäß des ersten Ausführungsbeispiels der Fall ist.

Ebenso wäre es denkbar auch mehr als zwei Schneidplatten vorzusehen, wobei die Hauptschneidkanten der einzelnen Schneidplatten jeweils ein radiales Segment der Bohrung von außen nach innen bearbeiten. Bei einer Ausgestaltung der ersten Schneidplatte 20, wie sie gemäß des ersten Ausführungsbeispiels in Fig. 1-3 gezeigt ist, genügt jedoch auch die Verwendung von nur einer Schneidplatte 20, da diese im Falle des ersten Ausführungsbeispiels die gesamte Kontur von ganz außen bis ins Zentrum bearbeitet.

## Patentansprüche

1. Bohrwerkzeug (10), aufweisend:
- einen Werkzeughalter (12), der sich entlang einer Mittelachse (14) erstreckt und eine erste Schneidplattenaufnahme (16) sowie eine zweite Schneidplattenaufnahme (18) aufweist, wobei die erste Schneidplattenaufnahme (16) eine erste Anlagefläche (24) hat, welche parallel zu der Mittelachse (14) ausgerichtet ist, und wobei die zweite Schneidplattenaufnahme (18) eine zweite Anlagefläche (26) hat, welche parallel zu der Mittelachse (14) ausgerichtet ist,
- eine erste Schneidplatte (20), die in der ersten Schneidplattenaufnahme (16) befestigt ist und mit einer ihrer Seiten an der ersten Anlagefläche (24) anliegt,
- eine zweite Schneidplatte (22), die in der zweiten Schneidplattenaufnahme (18) befestigt ist und mit einer ihrer Seiten an der zweiten Anlagefläche (26) anliegt,
wobei ein axialer Teilbereich der ersten Schneidplatte (20) über ein stirnseitiges Ende (38) des Werkzeughalters (12) axial absteht und die erste Schneidplatte (20) in dem axialen Teilbereich eine erste Hauptschneidkante (42) aufweist, welche gegenüber einer ersten imaginären Ebene (54), die orthogonal zu der Mittelachse (14) ausgerichtet ist und an dem stirnseitigen Ende (38) des Werkzeughalters (12) angeordnet ist, derart geneigt ist, dass ein radial außenliegendes Ende (58) der ersten Hauptschneidkante (42) einen größeren Abstand von der ersten imaginären Ebene (54) hat als ein radial innenliegendes Ende (60) der ersten Hauptschneidkante (42) und die erste Hauptschneidkante (42) die erste imaginäre Ebene (54) nicht schneidet, und
wobei die erste Hauptschneidkante (42) eine zweite imaginäre Ebene (56) berührt oder schneidet, die durch die Mittelachse (14) aufgespannt wird und orthogonal zu der ersten Anlagefläche (24) ausgerichtet ist,
**dadurch gekennzeichnet, dass** die erste Schneidplatte (20) aus CVD-Dickschicht-Diamant ist und stoffschlüssig mit der ersten Schneidplattenaufnahme (16) verbunden ist.

2. Bohrwerkzeug gemäß Anspruch 1, wobei die erste Anlagefläche (24) parallel zu einer Radialrichtung (28) des Werkzeughalters (12) ausgerichtet ist, die orthogonal zu der Mittelachse (14) verläuft.

3. Bohrwerkzeug gemäß Anspruch 1 oder 2, wobei die erste Hauptschneidkante (42) parallel zu der ersten Anlagefläche (24) ausgerichtet ist.

4. Bohrwerkzeug gemäß einem der Ansprüche 1-3, wobei die erste Hauptschneidkante (42) gegenüber der ersten imaginären Ebene (54) um einen Winkel von 0,2° bis 3° geneigt ist.

5. Bohrwerkzeug gemäß einem der Ansprüche 1-4, wobei die erste Hauptschneidkante (42) eine Länge hat, die größer als ein halber Durchmesser (D) des Werkzeughalters (12) ist.

6. Bohrwerkzeug gemäß einem der Ansprüche 1-5, wobei ein radialer Teilbereich der ersten Schneidplatte (20) über einen äußeren Umfang (40) des Werkzeughalters (12) absteht und die erste Schneidplatte (20) in dem radialen Teilbereich eine erste Nebenschneidkante (46) aufweist, die parallel zu der Mittelachse (14) verläuft oder gegenüber der Mittelachse (14) um maximal 2° geneigt ist.

7. Bohrwerkzeug gemäß Anspruch 6, wobei die erste Nebenschneidkante (46) mit der ersten Hauptschneidkante (42) über einen Radius und/oder eine Fase (50) verbunden ist.

8. Bohrwerkzeug gemäß Anspruch 6 oder 7, wobei die erste Nebenschneidkante (46) unter einem Winkel kleiner 90° zu der ersten Hauptschneidkante (42) geneigt ist.

9. Bohrwerkzeug gemäß einem der Ansprüche 1-8, wobei die zweite Anlagefläche (26) parallel zu der ersten Anlagefläche (24) ausgerichtet ist und beabstandet zu dieser angeordnet ist.

10. Bohrwerkzeug gemäß einem der Ansprüche 1-9, wobei ein axialer Teilbereich der zweiten Schneidplatte (22) über das stirnseitige Ende (38) des Werkzeughalters (12) absteht und die zweite Schneidplatte (22) in dem axialen Teilbereich eine zweite Hauptschneidkante (44) aufweist, welche gegenüber der ersten imaginären Ebene (54) derart geneigt ist, dass ein radial außenliegendes Ende (62) der zweiten Hauptschneidkante (44) einen größeren Abstand von der ersten imaginären Ebene (54) hat als ein radial innenliegendes Ende (64) der zweiten Hauptschneidkante (44) und die zweite Hauptschneidkante (44) die erste imaginäre Ebene (54) nicht schneidet.

11. Bohrwerkzeug gemäß Anspruch 10, wobei die erste Hauptschneidkante (42) gegenüber der ersten imaginären Ebene (54) um einen ersten Winkel (α) geneigt ist und die zweite Hauptschneidkante (44) gegenüber der ersten imaginären Ebene (54) um einen zweiten Winkel (δ), der ungleich dem ersten Winkel (α) ist, geneigt ist.

12. Bohrwerkzeug gemäß Anspruch 11, wobei die erste und die zweite Hauptschneidkante (42, 44) in einer Seitenansicht betrachtet einen Winkel (ε) einschließen, der kleiner als 180°, aber größer als 174° ist.

13. Bohrwerkzeug gemäß einem der Ansprüche 10-12, wobei die zweite Hauptschneidkante (44) die zweite imaginäre Ebene (56) weder berührt noch schneidet.

14. Bohrwerkzeug gemäß einem der Ansprüche 1-13, wobei die zweite Schneidplatte (22) über einen äußeren Umfang (40) des Werkzeughalters (12) absteht, die erste Schneidplatte (20) jedoch nicht.

15. Bohrwerkzeug gemäß einem der Ansprüche 1-14, wobei das Bohrwerkzeug (10) weder dreh- noch spiegelsymmetrisch ist.

## Claims

1. A drilling tool (10) comprising:
- a tool holder (12) that extends along a central axis (14) and comprises a first cutting insert receptacle (16) and a second cutting insert receptacle (18), wherein the first cutting insert receptacle (16) has a first abutment surface (24) oriented parallel to the central axis (14), and wherein the second cutting insert receptacle (18) has a second abutment surface (26) oriented parallel to the central axis (14)
- a first cutting insert (20) that is fixed in the first cutting insert receptacle (16) and abuts with one of its sides against the first abutment surface (24),
- a second cutting insert (22) that is fixed in the second cutting insert receptacle (18) and abuts with one of its sides against the second abutment surface (26),
wherein an axial portion of the first cutting insert (20) projects axially beyond an end face end (38) of the tool holder (12), and wherein the first cutting insert (20) comprises in the axial portion a first main cutting edge (42) that is inclined with respect to a first imaginary plane (54), which is oriented orthogonally to the central axis (14) and arranged at the end face end (38) of the tool holder (12), so that a radially outer end (58) of the first main cutting edge (42) is spaced a larger distance from the first imaginary plane (54) than a radially inner end (60) of the first main cutting edge (42) and the first main cutting edge (42) does not intersect the first imaginary plane (54), and
wherein the first main cutting edge (42) touches or intersects a second imaginary plane (56) that is spanned by the central axis (14) and oriented orthogonally to the first abutment surface (24),
**characterized in that** the first cutting insert (20) is made of CVD thick film diamond and is connected to the first cutting insert receptacle (16) in a firmly bonded manner.

2. The drilling tool according to claim 1, wherein the first abutment surface (24) is oriented parallel to a radial direction (28) of the tool holder (12) that is orthogonal to the central axis (14).

3. The drilling tool according to claim 1 or 2, wherein the first main cutting edge (42) is oriented parallel to the first abutment surface (24).

4. The drilling tool according to any one of claims 1-3, wherein the first main cutting edge (42) is inclined at an angle of 0.2° to 3° with respect to the first imaginary plane (54).

5. The drilling tool according to any one of claims 1-4, wherein a length of the first main cutting edge (42) is larger than half a diameter (D) of the tool holder (12).

6. The drilling tool according to any one of claims 1-5, wherein a radial portion of the first cutting insert (20) projects beyond an outer circumference (40) of the tool holder (12), and wherein the first cutting insert (20) comprises in the radial portion a first minor cutting edge (46) that is parallel to the central axis (14) or inclined with respect to the central axis (14) by a maximum of 2°.

7. The drilling tool according to claim 6, wherein the first minor cutting edge (46) is connected to the first main cutting edge (42) by a radius and/or a chamfer (50).

8. The drilling tool according to claim 6 or 7, wherein the first minor cutting edge (46) is inclined at an angle less than 90° with respect to the first main cutting edge (42).

9. The drilling tool according to any one of claims 1-8, wherein the second abutment surface (26) is arranged parallel and distanced to the first abutment surface (24).

10. The drilling tool according to any one of claims 1-9, wherein an axial portion of the second cutting insert (22) projects beyond the end face end (38) of the tool holder (12), and wherein the second cutting insert (22) comprises in the axial portion a second main cutting edge (44) that is inclined with respect to the first imaginary plane (54) in such a way that a radially outer end (62) of the second main cutting edge (44) is spaced a larger distance from the first imaginary plane (54) than a radially inner end (64) of the second main cutting edge (44) and the second main cutting edge (44) does not intersect the first imaginary plane (54).

11. The drilling tool according to claim 10, wherein the first main cutting edge (42) is inclined at a first angle (α) with respect to the first imaginary plane (54), and wherein the second main cutting edge (44) is inclined at a second angle (δ) different from the first angle (α) with respect to the first imaginary plane (54).

12. The drilling tool according to claim 11, wherein, when viewed in a side view, the first and second main cutting edges (42, 44) enclose an angle (ε) that is smaller than 180° but larger than 174°.

13. The drilling tool according to any of claims 10-12, wherein the second main cutting edge (44) neither touches nor intersects the second imaginary plane (56).

14. The drilling tool according to any one of claims 1-13, wherein the second cutting insert (22) projects beyond an outer circumference (40) of the tool holder (12), but the first cutting insert (20) does not.

15. The drilling tool according to any one of claims 1-14, wherein the drilling tool (10) is neither rotationally-symmetrical nor mirror-symmetrical.

## Revendications

1. Outil de perçage (10), présentant :
- un porte-outil (12), qui s'étend le long d'un axe central (14) et présente un premier logement de plaquette de coupe (16) et un deuxième logement de plaquette de coupe (18), le premier logement de plaquette de coupe (16) ayant une première surface d'appui (24) orientée parallèlement à l'axe central (14), et le deuxième logement de plaquette de coupe (18) ayant une deuxième surface d'appui (26) orientée parallèlement à l'axe central (14),
- une première plaquette de coupe (20) qui est fixée dans le premier logement de plaquette de coupe (16) et qui s'appuie par l'un de ses côtés contre la première surface d'appui (24),
- une deuxième plaquette de coupe (22) qui est fixée dans le deuxième logement de plaquette de coupe (18) et qui s'appuie par l'un de ses côtés contre la deuxième surface d'appui (26),
une zone partielle axiale de la première plaquette de coupe (20) faisant saillie axialement au-delà d'une extrémité frontale (38) du porte-outil (12) et la première plaquette de coupe (20) présentant dans la zone partielle axiale une première arête de coupe principale (42), qui est inclinée par rapport à un premier plan imaginaire (54) qui est orienté orthogonalement à l'axe central (14) et agencé à l'extrémité frontale (38) du porte-outil (12), de telle sorte qu'une extrémité radialement extérieure (58) de la première arête de coupe principale (42) est plus éloignée du premier plan imaginaire (54) qu'une extrémité radialement intérieure (60) de la première arête de coupe principale (42) et la première arête de coupe principale (42) ne coupe pas le premier plan imaginaire (54), et
la première arête de coupe principale (42) touchant ou coupant un deuxième plan imaginaire (56) défini par l'axe central (14) et orienté orthogonalement à la première surface d'appui (24),
**caractérisé en ce que** la première plaquette de coupe (20) est en diamant CVD à couche épaisse et est reliée par liaison de matière au premier logement de plaquette de coupe (16).

2. Outil de perçage selon la revendication 1, dans lequel la première surface d'appui (24) est orientée parallèlement à une direction radiale (28) du porte-outil (12) qui est orthogonale à l'axe central (14).

3. Outil de perçage selon la revendication 1 ou 2, dans lequel la première arête de coupe principale (42) est orientée parallèlement à la première surface d'appui (24).

4. Outil de perçage selon l'une quelconque des revendications 1 à 3, dans lequel la première arête de coupe principale (42) est inclinée d'un angle de 0,2° à 3° par rapport au premier plan imaginaire (54).

5. Outil de perçage selon l'une quelconque des revendications 1 à 4, dans lequel la première arête de coupe principale (42) a une longueur supérieure à un demi-diamètre (D) du porte-outil (12).

6. Outil de perçage selon l'une quelconque des revendications 1 à 5, dans lequel une zone partielle radiale de la première plaquette de coupe (20) fait saillie au-delà d'une périphérie extérieure (40) du porte-outil (12) et la première plaquette de coupe (20) présente, dans la zone partielle radiale, une première arête de coupe secondaire (46) qui est parallèle à l'axe central (14) ou qui est inclinée de 2° au maximum par rapport à l'axe central (14).

7. Outil de perçage selon la revendication 6, dans lequel la première arête de coupe secondaire (46) est reliée à la première arête de coupe principale (42) par le biais d'un rayon et/ou d'un chanfrein (50).

8. Outil de perçage selon la revendication 6 ou 7, dans lequel la première arête de coupe secondaire (46) est inclinée d'un angle inférieur à 90° par rapport à la première arête de coupe principale (42).

9. Outil de perçage selon l'une quelconque des revendications 1 à 8, dans lequel la deuxième surface d'appui (26) est orientée parallèlement à la première surface d'appui (24) et est agencée à distance de celle-ci.

10. Outil de perçage selon l'une quelconque des revendications 1 à 9, dans lequel une zone partielle axiale de la deuxième plaquette de coupe (22) fait saillie au-delà de l'extrémité frontale (38) du porte-outil (12) et la deuxième plaquette de coupe (22) présente, dans la zone partielle axiale, une deuxième arête de coupe principale (44) qui est inclinée par rapport au premier plan imaginaire (54) de telle sorte qu'une extrémité radialement extérieure (62) de la deuxième arête de coupe principale (44) est plus éloignée du premier plan imaginaire (54) qu'une extrémité radialement intérieure (64) de la deuxième arête de coupe principale (44) et la deuxième arête de coupe principale (44) ne coupe pas le premier plan imaginaire (54).

11. Outil de perçage selon la revendication 10, dans lequel la première arête de coupe principale (42) est inclinée par rapport au premier plan imaginaire (54) d'un premier angle (α) et la deuxième arête de coupe principale (44) est inclinée par rapport au premier plan imaginaire (54) d'un deuxième angle (δ) différent du premier angle (α).

12. Outil de perçage selon la revendication 11, dans lequel les première et deuxième arêtes de coupe principales (42, 44) forment un angle (ε) inférieur à 180°, mais supérieur à 174°, lorsqu'elles sont vues de côté.

13. Outil de perçage selon l'une quelconque des revendications 10 à 12, dans lequel la deuxième arête de coupe principale (44) ne touche ni ne coupe le deuxième plan imaginaire (56).

14. Outil de perçage selon l'une quelconque des revendications 1 à 13, dans lequel la deuxième plaquette de coupe (22) fait saillie au-delà d'une périphérie extérieure (40) du porte-outil (12), mais pas la première plaquette de coupe (20).

15. Outil de perçage selon l'une quelconque des revendications 1 à 14, dans lequel l'outil de perçage (10) n'est pas symétrique en rotation ou en miroir.
